# EUROPEAN PATENT SPECIFICATION

(11) **EP 4 376 118 B1**
(45) Date of publication and mention of the grant of the patent: **27.05.2026**
(21) Application number: 23165375.9
(22) Date of filing: 30.03.2023
(51) Int. Cl.: H01M 4/133, H01M 4/1393, H01M 4/36, H01M 4/583, H01M 4/90, H01M 10/054, H01M 4/38, H01M 10/052, H01M 4/02, H01M 4/04, H01M 4/136, H01M 4/1397, H01M 4/58, H01M 4/62, H01M 50/46

(54) **CARBON COMPOSITE FOR POSITIVE ELECTRODE OF LITHIUM-SULFUR BATTERY AND MANUFACTURING METHOD THEREOF**
KOHLENSTOFFVERBUNDSTOFF FÜR POSITIVE ELEKTRODE EINER LITHIUM-SCHWEFEL-BATTERIE UND HERSTELLUNGSVERFAHREN DAFÜR
COMPOSITE DE CARBONE POUR ÉLECTRODE POSITIVE DE BATTERIE AU LITHIUM-SOUFRE ET SON PROCÉDÉ DE FABRICATION

(30) Priority: 31.08.2022 KR 20220110385; 28.12.2022 KR 20220187899
(43) Date of publication of application: 29.05.2024
(73) Proprietor: LG Energy Solution, Ltd., Seoul 07335 (KR)
(72) Inventor: JEONG, Yo-Chan, 34122 Daejeon (KR); LEE, Chang-Hoon, 34122 Daejeon (KR); YANG, Seung-Bo, 34122 Daejeon (KR)
(74) Representative: Goddar, Heinz J.

(56) References cited:
- EP-A1- 3 940 822
- WO-A1-2022/121334
- CN-A- 111 477 874
- ZHANG ZE ET AL: "A High-Efficiency Sulfur/Carbon Composite Based on 3D Graphene Nanosheet@Carbon Nanotube Matrix as Cathode for Lithium-Sulfur Battery", vol. 7, no. 11, 27 January 2017 (2017-01-27), DE, XP093112498, ISSN: 1614-6832, Retrieved from the Internet <URL:https://api.wiley.com/onlinelibrary/tdm/v1/articles/10.1002%2Faenm.201602543> DOI: 10.1002/aenm.201602543

## Description

### TECHNICAL FIELD

The present disclosure relates to a positive electrode of a lithium-sulfur battery comprising a carbon composite and a method for manufacturing the same the carbon composite.

### BACKGROUND ART

A lithium-sulfur battery is a battery system using a sulfur-based material having a sulfur-sulfur (S-S) bond for a positive electrode active material and a lithium metal for a negative electrode active material. Sulfur, the main component of the positive electrode active material, is plentiful and can be found around the world, is non-toxic and has low atomic weight.

As secondary batteries are used in a wide range of applications including electric vehicles (EVs) and energy storage systems (ESSs), attention is directed to lithium-sulfur batteries having theoretically higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (Li₂Sₓ, x = 8, 6, 4, 2) through the reduction reaction and is completely reduced to lithium sulfide (Li₂S).

In this instance, the lithium polysulfide produced during charging/discharging is easily soluble in the electrolyte solution, causing battery capacity fading and cell degradation. To overcome the lithium polysulfide dissolution, many studies have been made on infiltration of sulfur in pores of a variety of porous carbon materials for use in positive electrodes. In particular, since it requires high production costs to synthesize carbon having large specific surface area, studies are chiefly made on physical and chemical modifications of carbon materials having low specific surface area for use in positive electrodes.

However, these studies present some solutions to the lithium polysulfide dissolution, but fail to promote the conversion reaction of lithium polysulfide to lithium sulfide (Li₂S).

WO 2022/121334 A1 discloses a negative electrode material, a preparation method therefor, and a lithium ion battery. The negative electrode material is a primary particle, the primary particle comprises a framework, and the framework comprises a main framework located in the primary particle and a plurality of branches extending from the main framework to the surface of the primary particle; the primary particle is of a microporous structure, a pore channel is formed in the primary particle, and the pore channel extends to the surface of the primary particle.

### DISCLOSURE

### Technical Problem

The present disclosure is directed to providing a carbon composite for a positive electrode of a lithium-sulfur battery and a method for manufacturing the same overcoming drawbacks of the prior art, especially for promoting the conversion of lithium polysulfide to lithium sulfide mitigating overvoltage.

### Technical Solution

The above problems are solved in accordance with the subject-matter of the independent claims. Further embodiments result from the sub-claims and the following description.

In an aspect of the present disclosure, carbon composites of the following exemplary embodiments are disclosed and positive electrode active materials of the following exemplary embodiments are provided. One or more of the following embodiments can be combined with each other. The embodiments achieved by combining two or more of the following embodiments have the features of the combined embodiments.

To achieve the above-described objective, a first embodiment of the present disclosure provides a positive electrode active material, comprising: a porous carbon support; and a sulfur or sulfide infiltrated into pores of the porous carbon support, wherein the porous carbon support comprises the carbon composite, wherein the carbon composite comprises a porous carbon material; and vanadium nitride particles on a surface of the porous carbon material.

In a second embodiment, in the first embodiment a specific surface area measured by BET method in accordance with ISO 15901:2019 of the carbon composite according to the present disclosure is 250 m²/g or more.

In a third embodiment, in the first or the second embodiment a pore volume according to ASTM D4641 of the carbon composite according to the present disclosure is 1.0 cm³/g or more.

In a fourth embodiment, in any of the first to the third embodiment an average pore size measured by calculating through N₂ isotherm analysis obtained based on adsorption of liquid nitrogen of the carbon composite according to the present disclosure is 10 nm or more.

In a fifth embodiment, in any of the first to the fourth embodiment the positive electrode active material according to the present disclosure is characterized in that an average size of the vanadium nitride particles measured by XRD analysis is 200 nm or less.

In a sixth embodiment, in any of the first to the fourth embodiment the positive electrode active material according to the present disclosure is characterized in that the vanadium nitride particles are included in an amount of 5 to 50 parts by weight based on 100 parts by weight of the carbon composite.

In an seventh embodiment, in the any of the first to the sixth embodiment the positive electrode active material is characterized in that a weight ratio of the sulfur or sulfide and the carbon composite is 1:1 to 9:1.

According to an eighth embodiment, a positive electrode according to an aspect of the present disclosure comprises a current collector; and an active material layer on at least one surface of the current collector, the active material layer comprising the positive electrode active material according to the first to the eighth embodiment, a binder and a conductive material.

In a ninth embodiment, in the eighth embodiment the positive electrode is characterized in that the conductive material comprises a carbon composite comprising a porous carbon material; and vanadium nitride particles on a surface of the porous carbon material.

According to an tenth embodiment, a positive electrode according to an aspect of the present disclosure comprises a current collector; and an active material layer on at least one surface of the current collector, the active material layer comprising a porous carbon support in which a sulfur or a sulfur compound is infiltrated into pores, a binder and a conductive material, wherein the conductive material comprises the above-described carbon composite, i.e. a carbon composite comprising porous carbon material and vanadium nitride particles on a surface of the porous carbon material.

In an eleventh embodiment, in the tenth embodiment the positive electrode is characterized in that the conductive material is included in an amount of 0.01 to 30 parts by weight based on 100 parts by weight of the positive electrode active material layer in total.

According to a thirteenth embodiment, method for manufacturing a carbon composite comprising a porous carbon material; and vanadium nitride particles on a surface of the porous carbon material, the method comprises a first step of adding and dispersing a porous carbon material; vanadium nitride or its precursor; and a reducing agent in a solvent; a second step of filtering a result of the first step to remove the solvent and drying; and a third step of thermally treating a result of the second step in an inert atmosphere, wherein the third step comprises a first process of thermally treating at 350°C to 650°C; and a second process of thermally treating at 650°C to 1400°C.

### Advantageous Effects

It is possible to convert lithium polysulfide to lithium sulfide quickly by using the carbon composite according to the present disclosure as a conductive material of lithium-sulfur batteries or a carrier of sulfur or sulfide of lithium-sulfur batteries.

Additionally, the method for manufacturing the carbon composite according to the present disclosure can uniformly infiltrate catalysts into the porous carbon support without using harmful gases such as NH₃ and strong acids such as HF.

In addition, that in lithium-sulfur batteries comprising the carbon composite in accordance with the present invention, overvoltage is mitigated.

### DESCRIPTION OF DRAWINGS

The accompanying drawings illustrate an exemplary embodiment of the present disclosure, and together with the foregoing disclosure, serve to provide further understanding of the technical aspect of the present disclosure, and thus the present disclosure should not be construed as being limited to the drawings.
FIG. 1 is a graph showing the specific surface area of a carbon composite according to an embodiment of the present disclosure.
FIG. 2 is a scanning electron microscopy (SEM) image of an observed carbon composite according to an embodiment of the present disclosure.
FIG. 3 is an SEM image of an observed carbon composite according to an embodiment of the present disclosure.
FIG. 4 is an SEM image of an observed carbon composite according to a comparative example of the present disclosure.
FIG. 5 is a charge/discharge performance evaluation graph of a lithium-sulfur battery according to an embodiment of the present disclosure.
FIG. 6 is a charge/discharge performance evaluation graph of a lithium-sulfur battery according to a comparative example of the present disclosure.
FIG. 7 is a charge/discharge performance evaluation graph of a lithium-sulfur battery according to a comparative example of the present disclosure.
FIG. 8 is a performance evaluation graph of a lithium-sulfur battery according to an embodiment of the present disclosure.
FIG. 9 is a performance evaluation graph of a lithium-sulfur battery according to an embodiment of the present disclosure.

### BEST MODE

Hereinafter, the present disclosure will be described in detail with reference to the accompanying drawings. It should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiment proposed herein and the illustration shown in the drawing is an exemplary embodiment of the present disclosure, but not intended to fully describe the technical aspect of the present disclosure, so it should be understood that a variety of other equivalents and modifications could have been made thereto at the time that the application was filed.

In the present specification, when a part is described to "include" a certain element, it means that other elements may be further included, rather than excluding other elements, unless specially stated otherwise. Terms like "including", "comprising", "containing" etc. however, include the possibility to have the meaning "consisting of" if not excluded explicitly.

In the present specification, the expression "A and/or B" means A or B or both.

Certain terminology used in the present specification is for convenience and not for limitation. For example, the terms indicating positions such as 'top', 'bottom', 'left', 'right', 'anterior', 'rear', 'inner' and 'outer' may be used to describe relative locations or directions rather than absolute positions or to indicate positions and orientations in the drawings to which reference is made. These terms include, in addition to the words listed above, derivatives thereof and words with similar meanings.

The term "composite" as used herein refers to a combination of two or more materials that have physically and/or chemically different phases and exert more effective functions.

The term "polysulfide" as used herein is the concept including "polysulfide ion (Sₓ²⁻, x = 8, 6, 4, 2))" and "lithium polysulfide (Li₂Sₓ or LiSₓ, x = 8, 6, 4, 2)".

Regarding the properties described herein, in case that measurement conditions and methods are not described in detail, the properties are measured by the measurement conditions and methods commonly used by those having ordinary skill in the corresponding technical field.

The present disclosure describes a carbon composite that may be used in a positive electrode of a lithium-sulfur battery. The use of the carbon composite is not limited to a particular application, but in particular, the carbon composite is preferably used as a conductive material or a porous support for infiltration of sulfur or sulfide in a lithium-sulfur secondary battery.

The carbon composite comprised in the positive electrode active material according to an aspect of the present disclosure comprises a porous carbon material, and vanadium nitride particles on the surface of the porous carbon material. The vanadium nitride particles may be arranged on the entire surface of the porous carbon material or only on one or more parts of the surface of the porous carbon material. During charging/discharging of lithium-sulfur batteries, in general, lithium polysulfide dissolution occurs at the positive electrode, and when the carbon composite according to an aspect of the present disclosure is applied as at least one of a conductive material or a carrier of sulfur or sulfide in a lithium-sulfur battery, the vanadium nitride particles included in the carbon composite act as catalysts to convert lithium polysulfide to lithium sulfide quickly, thereby preventing the dissolution of lithium polysulfide in the electrolyte solution.

In the present disclosure, the sulfur or sulfide may be referred to as a sulfur-based material.

In an embodiment of the present disclosure, the porous carbon material may be crystalline at least in part or in whole. If the porous carbon material is crystalline at least in part or in whole the catalytic activity of the vanadium nitride particles is improved. For example, when an amorphous porous carbon material is used as at least a portion of a conductive material and/or a positive electrode active material, the amorphous carbon portion may act as a resistance in an electrochemical reaction of a battery and may cause degradation of battery performance. Accordingly, when the porous carbon material is at least partially or wholly crystalline, the resistance in an electrode using the porous carbon material can be reduced and the catalytic activity provided by the vanadium nitride particles can be improved, but the mechanism of the present invention is not limited thereto.

"Crystalline" in terms of the present disclosure may refer to the presence of three-dimensional order on the level of atomic dimensions. An amount of disorder within the crystalline region is not incompatible with this concept. The degree of crystallinity of the porous carbon material may be measured by X-Ray Diffraction (XRD) analysis. 'XRD' is the analysis of diffraction (black condition: 2dsinθ=nλ: the distance between 2 planes is d, an angle at which a plane is formed with X-ray is θ, an arbitrary integer is n, and the wavelength of X-ray is λ) resulting by scattering and interference of X-ray by electrons around atoms when a sample is irradiated with X-ray, and is used to determine the phase, quantity, crystal size or crystallinity of the components. For example, crystalline may mean that the respective carbon shows at least one distinct peak in a XRD spectrum.

For example, when at least one independent peak appears in XRD spectrum, it can be seen that the porous carbon material is crystalline at least in part. In this instance, in the independent peak, a signal is measured 1 time or more, 1.5 times or more, 2 times or more, 5 times or more or 10 times or more, compared to noise.

In an embodiment of the present disclosure, in case that the porous carbon material is crystalline at least in part, it has higher elasticity than amorphous carbon materials. Here, for example, the amorphous carbon materials may be the carbon material disclosed by Liu at al. Nanoscale, 2018, 10 5246-5253.

In case that the porous carbon material is crystalline in whole, it may have higher elasticity than amorphous carbon materials.

In an embodiment of the present disclosure, the porous carbon material may comprise the micropores in the outer surface and inside, and the average diameter of the micropores may range, for example, from 1 nm to 200 nm, for example, from 1 nm to 100 nm, from 10 nm to 80 nm or from 20 nm to 50 nm. The average diameter of the pores may be measured in accordance with ISO 15901:2019 known in the corresponding technical field, but is not limited thereto.

Additionally, in an embodiment of the present disclosure, the porosity (or void fraction) of the porous carbon material may range from 10 vol.-% to 90 vol.-% with respect to the total volume of the porous carbon material. The porosity of the porous carbon material may be measured by the method in accordance with ISO 15901:2019 known in the corresponding technical field, but the measurement method is not limited thereto.

In an embodiment of the present disclosure, the pore volume of the porous carbon material may be, for example, 1 cm³/g to 20 cm³/g or 1 cm³/g to 10 cm³/g. The pore volume may be, for example, a value calculated and measured through N₂ isotherm analysis obtained based on adsorption of liquid nitrogen. When the pore volume of the porous carbon material meets the above-described range, a sufficient amount of vanadium nitride particles that act as catalysts may be present on the surface of the porous carbon material.

The pore volume may be measured using AUTOSORB iQ series (Quantachrome) in accordance with ASTM D4641, and the pore volume may be a measured value by calculating through N₂ isotherm analysis obtained based on adsorption of liquid nitrogen.

In an embodiment of the present disclosure, for example, the porous carbon material may have the specific surface area of 100 to 2000 m²/g, 300 to 2000 m²/g, 400 to 1800 m²/g, 450 to 1500 m²/g or 500 to 1200 m²/g. The specific surface area may be measured by the BET method in accordance with ISO 15901:2019 known in the corresponding technical field, but is not limited thereto. When the specific surface area of the porous carbon material meets the above-described range, a sufficient amount of vanadium nitride particles that act as catalysts may be present on the surface of the porous carbon material.

In an embodiment of the present disclosure, the porous carbon material may comprise or consist of one or more of the group consisting of carbon nanotubes (CNT), graphene, graphene oxide (GO), reduced graphene oxide (rGO), carbon black, graphite, graphite nanofiber (GNF), carbon nanofiber (CNF), activated carbon fiber (ACF), natural graphite, artificial graphite, expanded graphite, activated carbon and fullerene.

In an embodiment of the present disclosure, the porous carbon material may comprise or consist of one or more of the group consisting of carbon nanotubes and reduced graphene oxide.

Additionally, the porous carbon material may comprise or consist of reduced graphene oxide doped with nitrogen, oxygen or phosphorus, and may comprise or consist of graphene doped with nitrogen, oxygen or phosphorus.

A carbon nanotube in terms of the present disclosure is a tube made of carbon connected in a hexagonal shape. The tube made of carbon has typically a diameter of several nanometers, such as from 1 to 100 nm. Here, the length of the respective carbon nanotubes is not particularly limited.

According to an embodiment of the present disclosure, the carbon nanotubes may be classified into single-walled carbon nanotubes (SWCNT) or multi-walled carbon nanotubes (MWCNT) according to the number of carbon atom layers (also known as 'carbon walls') in their structure. In an embodiment of the present disclosure, when each of the first porous carbon material and the second porous carbon material optionally comprises or consists of carbon nanotubes, the carbon nanotubes may comprise or consist of at least one of single-walled carbon nanotubes (SWCNT) and/or at least one multi-walled carbon nanotubes (MWCNT).

In another embodiment of the present disclosure, the carbon nanotubes may exist such that two or more carbon nanotubes come into close contact and get entangled with each other by their cohesion strength. In particular, in an embodiment of the present disclosure, the carbon nanotubes may be provided in the form of a carbon nanotube dispersion in which carbon nanotubes are dispersed as a single strand in a dispersion medium, but may be provided in the form of secondary structure or an agglomerate of carbon nanotubes of primary structure.

In this aspect, when the porous carbon material optionally comprises carbon nanotubes, the carbon nanotubes may comprise at least one of a bundled secondary structure or an entangled secondary structure.

The bundled secondary structure of the carbon nanotubes is an agglomerate of primary structures oriented in the lengthwise direction of the carbon nanotubes by the cohesion strength between carbon, each primary structure being single-stranded carbon nanotubes, and may be referred to as bundled CNT.

The entangled secondary structure of the carbon nanotubes is a randomly entangled and agglomerated form of primary structures in a spherical shape, each primary structure being single-stranded carbon nanotubes, and may be referred to as entangled CNT. The entangled CNT may have the improved porosity by interstitial volume formed by the entanglement of the carbon nanotubes of primary structure, compared to the carbon nanotubes of primary structure.

The carbon nanotubes included in the carbon composite may comprise or consist of one or more twisted carbon nanotube(s) (carbon nanotube strand), and may comprise or consist of entangled carbon nanotubes. As described above, the carbon nanotubes included in the carbon composite may comprise or consist of one or more carbon nanotubes twisted or entangled, and the carbon composite may have a porous structure having spaces between the carbon nanotubes.

As described above, the bundled or entangled carbon nanotubes as the porous carbon material may have a porous structure in which spaces are formed between the carbon nanotubes as one or more carbon nanotubes are twisted or entangled.

Reduced graphene oxide (RGO) is the form of GO that is processed by chemical, thermal and other methods in order to reduce the oxygen content. The reduced graphene oxide may comprise or consist of a bent reduced graphene oxide, and may comprise or consist of bent and entangled reduced graphene oxides. Alternatively, the reduced graphene oxide may comprise or consist of crumpled reduced graphene oxides. As described above, the reduced graphene oxide included in the carbon composite may comprise or consist of one or more reduced graphene oxide entangled or crumpled, and the carbon composite may have a porous structure having spaces between the reduced graphene oxides.

The vanadium nitride (VN) is a compound of nitrogen and vanadium. The carbon composite according to the present disclosure comprises vanadium nitride particles on the surface of the porous carbon material.

In an embodiment of the present disclosure, the vanadium nitride particles may be those having catalytic activity for oxidation reactions and/or reduction reactions for one or more selected from the group consisting of sulfur (S₈), lithium sulfide (Li₂S), lithium polysulfide (Li₂Sx, 2≤x≤8) and disulfide compound.

In an embodiment of the present disclosure, the vanadium nitride particles may be disposed in at least one of the outer surface of the porous carbon material and an inner surface of the pores. Preferably, the vanadium nitride particles may be bonded to the outer surface of the porous carbon material by adsorption.

For example, the carbon nanotube is a tube made of carbon connected in a hexagonal shape, and the vanadium nitride particles may be present on the inner surface (or a part thereof) and/or on the outer surface (or a part thereof) of the carbon nanotube having the tube shape, and in particular, may be present on the outer surface (or a part thereof) of the carbon nanotube. Here, the method of placing the vanadium nitride on the surface of the porous carbon material is not limited to a particular method, but for example, the vanadium nitride may be attached to or deposited on the surface of the porous carbon material.

In an embodiment of the present disclosure, the average size of the vanadium nitride particles may be 200 nm or less, and specifically, the average particle size may be 190 nm or less, 180 nm or less, 170 nm or less, 160 nm or less or 20 nm or less. Additionally, the average size of the vanadium nitride particles may be 1 nm or more or 2 nm or more. The average size of the vanadium nitride particles may be from 1 nm to 200 nm, from 1 nm to 190 nm, from 1 nm to 180 nm, from 1 nm to 170 nm, from 1 nm to 160 nm, or from 2 nm to 20 nm.

The average particle size may refer to the average particle diameter, wherein the particle diameter of a single particle can be the largest distance between two opposed surfaces of the particles.

When the average particle size (average particle diameter) of the vanadium nitride particles corresponds to the above-described range, the specific surface area of the vanadium nitride particles that act as catalysts increases, thereby improving the reaction with lithium polysulfide, and the surface is not completely covered with lithium sulfide produced during discharging, thereby allowing reversible reaction, and a larger amount of catalysts may be present on the surface of the porous carbon material.

The average size of the vanadium nitride particles may be measured by XRD analysis as described above (black condition: 2dsinθ=nλ: the distance between 2 planes is d, an angle at which a plane is formed with X-ray is θ, an arbitrary integer is n, and the wavelength of X-ray is λ), and may be derived using a Scherrer equation.

The average size of the vanadium nitride particles may be the particle size D50. In the present disclosure, the "particle size Dn" refers to a particle size at n% of cumulative particle size distribution. D50 refers to a particle size at 50% of cumulative particle size distribution, namely, the average particle size, D90 is a particle size at 90% of cumulative particle size distribution, and D10 is a particle size at 10% of cumulative particle size distribution.

The Dn may be measured using a laser diffraction method. Specifically, the particle size distribution is calculated by dispersing a target powder in a dispersion medium and measuring a diffraction pattern difference according to particle size when particles pass through a laser beam using a commercially available laser diffraction particle size measurement device (for example, Microtrac S3500). D10, D50 and D90 may be measured by calculating the particle diameter at 10%, 50% and 90% of cumulative particle size distribution in the measurement device. For example, the particle size sistribution (D50) is also known as the median diameter or the medium value of the particle size distribution, it is the value of the particle diameter at 50% in the cumulative distribution, that, if D50 = x nm, then 50% of the particles in the sample are larger than x nm, and 50% smaller than x nm.

In an embodiment of the present disclosure, the porous carbon material may comprise or consist of carbon nanotubes and/or reduced graphene oxide (entangled and/or crumpled), and the average particle size (D₅₀) (average particle diameter D50) of the porous carbon material may be 10 to 80 *µ*m. For example, entangled carbon nanotube strands may form the porous carbon material, and the average particle size (D₅₀) of each porous carbon material may correspond to the above-described numerical range.

In an embodiment of the present disclosure, the vanadium nitride particles may be included the carbon composite in an amount of 3 to 50 parts by weight based on 100 parts by weight of the carbon composite. The vanadium nitride particles may be included the carbon composite in an amount of at least 10 parts by weight, at least 20 parts by weight, at least 35 parts by weight, or at least 40 parts by weight based on 100 parts by weight of the carbon composite. The vanadium nitride particles may be included the carbon composite in an amount of not more than 50 parts by weight, not more than 40 parts by weight, not more than 35 parts by weight, or not more than 30 parts by weight based on 100 parts by weight of the carbon composite. Specifically, the vanadium nitride particles may be included the carbon composite in an amount of 3 to 40 parts by weight, 3 to 30 parts by weight, 40 to 50 parts by weight, 35 to 50 parts by weight, 10 to 40 parts by weight or 20 to 30 parts by weight based on 100 parts by weight of the carbon composite. When the amount of the vanadium nitride particles is included in the above-described ranges, the vanadium nitride particles may convert lithium polysulfide to lithium sulfide quickly, prevent the dissolution of lithium polysulfide in the electrolyte solution, and maintain the optimal resistance and weight.

In an embodiment of the present disclosure, the specific surface area of the carbon composite may be 250 m²/g or more, and specifically, may be 260 m²/g or more, 270 m²/g or more, 280 m²/g or more, 290 m²/g or more or 300 m²/g or more. The specific surface area of the carbon composite may be 250 m²/g or more, and specifically, may be 400 m²/g or less or 500 m²/g or less. The specific surface area of the carbon composite may be 250 m²/g or more, and specifically, may be 250 m²/g to 500 m²/g, 260 m²/g to 500 m²/g, 270 m²/g to 500 m²/g, 280 m²/g to 400 m²/g, 290 m²/g to 400 m²/g, or 300 m²/g to 400 m²/g.

When the specific surface area of the carbon composite corresponds to the above-described ranges, a sufficient amount of vanadium nitride may be present on the surface of the carbon composite, it is possible to improve the conversion performance of lithium polysulfide to lithium sulfide by the sufficient amount of vanadium nitride on the surface, and the surface of the porous carbon material is not completely covered with lithium polysulfide or lithium sulfide produced during discharging, thereby allowing reversible reaction.

The specific surface area is measured by the BET method, and specifically, may be calculated from the amount of adsorbed nitrogen gas under liquid nitrogen temperature (77K) using BEL Japan's BELSORP-mino II.

In an embodiment of the present disclosure, the pore volume of the carbon composite may be 1.0 cm³/g or more, and specifically, may be 1.1 cm³/g or more, 1.2 cm³/g or more, 1.3 cm³/g or more or 1.4 cm³/g or more. The pore volume of the carbon composite may be 2.5 cm³/g or less, 2.7 cm³/g or less, 3.0 cm³/g or less. The pore volume of the carbon composite may be 1.0 cm³/g to 3.0 cm³/g, 1.1 cm³/g to 3.0 cm³/g, 1.2 cm³/g to 2.7 cm³/g, 1.3 cm³/g to 2.5 cm³/g, or 1.4 cm³/g to 2.5 cm³/g. When the pore volume of the carbon composite corresponds to the above-described ranges, a sufficient amount of vanadium nitride particles that act as catalysts may be present on the surface of the porous carbon material, and it is possible to improve the conversion performance of lithium polysulfide to lithium sulfide by the sufficient amount of vanadium nitride catalysts on the surface, and the surface is not completely covered with lithium sulfide produced during discharging, thereby allowing reversible reaction, and the electrolyte is sufficiently impregnated in the pores, thereby ensuring ionic conductivity.

The pore volume may be measured using AUTOSORB iQ series (Quantachrome) in accordance with ASTM D4641, and the pore volume may be a measured value by calculating through N₂ isothem analysis obtained based on adsorption of liquid nitrogen.

In an embodiment of the present disclosure, the average pore size of the carbon composite may be 10 nm or more, 15 nm or more. The average pore size of the carbon composite may be 50 nm or less, 70 nm or less, 100 nm or less. The average pore size of the carbon composite 10 nm to 100 nm, 10 nm to 70 nm, or 15 nm to 50 nm.

When the average pore size of the carbon composite meets the above-described range, it is possible to effectively adsorb lithium polysulfide, and make the electrolyte's access to the pores easy, thereby maintaining the optimal ionic conductivity, resulting in improved reactivity.

Here, the average pore size of the pores in the porous carbon material may be, for example, a measured value by calculating through N2 isotherm analysis obtained based on adsorption of liquid nitrogen.

In an embodiment of the present disclosure, the carbon composite may comprise a small amount of VxOy (0<x<2. 0<y<5) formed as a by-product when the vanadium nitride particles are formed. In this instance, the amount may be measured by calculating the residual mass at 950°C using ThermoGravimetric Analysis (TGA).

In an embodiment of the present disclosure, the vanadium nitride may be coated with a carbon layer. Specifically, the carbon layer may be 5 nm or less in thickness, such as from 0.1 nm to 5 nm, for example 1 nm to 5 nm. The thickness of the carbon layer may be measured by TEM. When the thickness of the carbon layer meets the above-described range, it is possible to increase the stability of the vanadium nitride catalysts while maintaining the effect of the catalysts.

In an embodiment of the present disclosure, the carbon layer coated on the vanadium nitride may be 1 to 3-layered, 1 to 4-layered or 1 to 5-layered. In this instance, the total thickness of the carbon layer may be 5 nm or less.

In an embodiment of the present disclosure, the XRD peak of the carbon composite appears at 2θ, that is, the carbon composite has a crystalline structure resulting in a XRD peak at 2θ.

In an embodiment of the present disclosure, the Raman spectrum peak (I_{D}/I_{G} ratio) of the carbon composite may be 2.0 or less, preferably the I_{D}/I_{G} ratio of the carbon composite may be 0.5 or more to 2.0 or less. The intensity ratio (ID/IG ratio) may be measured through peak intensity I_{G} and I_{D} values obtained from a spectrum of the carbon composite obtained through Raman spectroscopy. The I_{G} means the peak of the crystalline part (G-peak, 1573 / cm), and the I_{D} means the peak of the amorphous part (D-peak, 1309 / cm). Therefore, at this time, the smaller the I_{D}/I_{G} ratio value, the higher the crystallinity. When the peak meets the above-described range, it is possible to maintain the optimal electrical conductivity and mechanical strength. I_{D}/I_{G} may be measured and calculated using the Raman scattering measurement method.

In an embodiment of the present disclosure, the degree of crystallinity of the carbon composite may be 70% or more. The degree of crystallinity is measured using at least one of Raman spectroscopy analysis or XRD analysis. When the degree of crystallinity lies in the above-described range, it is possible to prevent catalyst performance degradation while maintaining the optimal electrical conductivity, and maintain the resistance below a predetermined level.

According to an aspect of the present disclosure, there is provided a positive electrode active material comprising a porous carbon support; and a sulfur or sulfide infiltrated into pores of the porous carbon support, wherein the porous carbon support comprises or consists of the carbon composite according to the present disclosure.

According to an embodiment of the present disclosure, the sulfur and/or sulfide infiltrated into the pores of the porous carbon support may comprise at least one selected from the group consisting of an inorganic sulfur (S₈), Li₂Sₙ (n≥1), a disulfide compound such as 2,5-dimercapto-1,3,4-thiadiazole and 1,3,5-trithiocyanuic acid, and an organic sulfur compound. Preferably, sulfur is infiltrated into the pores of the porous carbon support and the sulfur is inorganic sulfur (S₈).

When the sulfur or sulfide is infiltrated into the carbon composite according to an embodiment of the present disclosure, a weight ratio of the sulfur or the sulfide) and the carbon composite may (that is, the ratio of the weight of sulfur : weight of the carbon composite; the ratio of the weight of sulfide : weight of the carbon composite; or the ratio of the combined weight of sulfur and sulfide : weight of the carbon composite be 1:1 to 9:1, 2:1 to 8:1, 5:1 to 9:1 or 8:1 to 9:1. When the weight ratio of the sulfur or sulfide and the carbon composite meets the above-described ranges, it is possible to prevent particle agglomeration of the sulfur or sulfide, which makes it easy to accept electrons and allows the direct participation in electrode reaction, and control the optimal amount of binder necessary to prepare a positive electrode slurry, thereby preventing the increase in surface resistance of the electrode or cell performance degradation.

A conductive material which may be included in the positive electrode active material, especially in a layer formed therefrom, respectively in an active material layer is a material that electrically connects an electrolyte solution to the positive electrode active material and acts as a path of movement of electrons from the current collector to the positive electrode active material, and may comprise any material having conductivity properties without limitation. In an embodiment, the conductive material may comprise at least one of carbon black such as Super-P, denka black, acetylene black, ketjen black, channel black, furnace black, lamp black, thermal black, carbon black; carbon derivatives such as carbon nanotubes, graphene, fullerene; conductive fibers such as carbon fibers or metal fibers; metal powder such as fluoro carbon, aluminum, nickel powder; or conductive polymers such as polyaniline, polythiopene, polyacetylene, polypyrrole. Additionally, the conductive material may comprise the carbon composite according to the present disclosure.

The conductive material may be included in an amount of 0.01 to 30 parts by weight based on 100 parts by weight of the positive electrode active material, especially the positive electrode active material layer.

According to one aspect of the invention, there is provided a positive electrode, comprising: a current collector; and an active material layer on at least one surface of the current collector, wherein the active material layer comprises the positive electrode active material according to the present invention, a binder and a conductive material.

According to an embodiment of the present disclosure, the positive electrode active material according to the invention may be coated on the current collector to form the active material layer. The current collector is not limited to a particular material and may comprise any material that supports the positive electrode active material layer and has high conductivity without causing any chemical change to the corresponding battery. For example, the current collector may comprise copper, stainless steel, aluminum, nickel, titanium, palladium, sintered carbon, copper or stainless steel treated with carbon, nickel or silver on the surface and an aluminum-cadmium alloy.

The current collector may have microtexture on the surface to enhance the bonding strength with the positive electrode active material, and may come in various forms, for example, films, sheets, foils, mesh, nets, porous bodies, foams and non-woven fabrics.

The current collector is not limited to a particular thickness, but may be, for example, 3 to 500 *µ*m in thickness.

The active material layer may further comprise a binder. The binder serves to maintain the positive electrode active material on the positive electrode current collector and organically connect the positive electrode active material to increase the bonding strength between them, and may comprise any binder well known in the corresponding technical field. For example, the binder may comprise any one selected from the group consisting of a fluororesin binder including polyvinylidene fluoride (PVdF) or polytetrafluoroethylene (PTFE); a rubber-based binder including styrene butadiene rubber (SBR), acrylonitrile-butadiene rubber and styrene-isoprene rubber; a cellulose-based binder including carboxyl methyl cellulose (CMC), starch, hydroxypropyl cellulose and regenerated cellulose; a polyalcohol-based binder; a polyolefin-based binder including polyethylene and polypropylene; a polyimide-based binder; a polyester-based binder; a polyacrylate-based binder; and a silane-based binder or a mixture or copolymer thereof.

The binder may be added in an amount of 0.5 to 30 parts by weight when the total weight of the positive electrode active material layer is 100 parts by weight. When the amount of the binder meets the above-described range, it is possible to improve the physical properties of the positive electrode, prevent separation of the active material and the conductive material in the positive electrode, and control the optimal ratio of the active material and the conductive material in the positive electrode, thereby ensuring battery capacity.

According to an aspect of the present disclosure, there is provided a positive electrode comprising a current collector; and an active material layer on at least one surface of the current collector, the active material layer comprising a porous carbon support in which a sulfur or a sulfur compound is infiltrated into pores, a binder and a conductive material, wherein the conductive material comprises the above-described carbon composite according to the present disclosure.

According to an embodiment of the present disclosure, when the conductive material is the above-described carbon composite in which vanadium nitride is present on the surface of the porous carbon material, the conductive material may be included in an amount of 0.1 to 30 parts by weight based on 100 parts by weight of the positive electrode active material layer in total, and specifically, 0.5 to 20 parts by weight, 1 to 10 parts by weight or 1 to 5 parts by weight.

When the conductive material is included in the above-described range, it is possible to improve the conduction of electrons between the active material particles or between the active material and the current collector and reduce the resistance in the electrode. Additionally, the conductive material is dispersed between the compressed active material particles and micropores are maintained between the active material particles, which makes the permeation of the electrolyte solution easy.

According to an embodiment of the present disclosure, the porous carbon support in which the sulfur or sulfide is infiltrated into the pores may comprise the commonly used porous carbon supports for infiltration of sulfur or sulfide in lithium-sulfur batteries, and may also comprise the carbon composite in which vanadium nitride is present on the surface of the porous carbon material according to the present disclosure.

In the positive electrode, the binder serves to maintain the positive electrode active material on the positive electrode current collector and organically connect the positive electrode active material to increase the bonding strength between them, and may comprise any binder known in the corresponding technical field. For example, the binder may comprise any one selected from the group consisting of a fluororesin binder including polyvinylidene fluoride (PVdF) or polytetrafluoroethylene (PTFE); a rubber-based binder including styrene butadiene rubber (SBR), acrylonitrile-butadiene rubber and styrene-isoprene rubber; a cellulose-based binder including carboxyl methyl cellulose (CMC), starch, hydroxypropyl cellulose and regenerated cellulose; a polyalcohol-based binder; a polyolefin-based binder including polyethylene and polypropylene; a polyimide-based binder; a polyester-based binder; and a silane-based binder or a mixture or copolymer thereof.

The binder may be added in an amount of 0.5 to 30 parts by weight when the total weight of the positive electrode active material layer is 100 parts by weight. When the amount of the binder meets the above-described range, it is possible to improve the physical properties of the positive electrode, thereby preventing separation of the active material and the conductive material in the positive electrode, and control the optimal ratio of the active material and the conductive material in the positive electrode, thereby ensuring battery capacity.

According to an embodiment of the present disclosure, the current collector is not limited to a particular material and may comprise any material that supports the positive electrode active material layer and has high conductivity without causing any chemical change to the corresponding battery. For example, the current collector may comprise copper, stainless steel, aluminum, nickel, titanium, palladium, sintered carbon, copper or stainless steel treated with carbon, nickel or silver on the surface and an aluminum-cadmium alloy.

The current collector may have microtexture on the surface to enhance the bonding strength with the positive electrode active material, and may come in various forms, for example, films, sheets, foils, mesh, nets, porous bodies, foams and non-woven fabrics.

The current collector is not limited to a particular thickness, but may be, for example, 3 to 500 *µ*m in thickness.

According to an aspect of the present disclosure, there is provided a method for manufacturing a carbon composite comprising a porous carbon material; and vanadium nitride particles on the surface of the porous carbon material.

The method for manufacturing the carbon composite includes a first step of adding and dispersing a porous carbon material, vanadium nitride and/or its precursor, and a reducing agent in a solvent; a second step of filtering the result of the first step to remove the solvent and drying; and a third step of thermally treating the result of the second step in an inert atmosphere.

In the first step, the precursor of the vanadium nitride may comprise at least one selected from dicyandiamide, ammonium metavanadate (NH₄VO₃), vanadium oxide, ammonia (NH3) and ammonium chloride, especially may comprise a mixture of an N-containing precursor, such as dicyandiamide and a V-containing precursor, such as ammonium metavanadate. For example, the vanadium nitride may be produced using a mixture of dicyandiamide and ammonium metavanadate.

The reducing agent may comprise at least one carbon-based reducing agent, such as a reducing agent selected from glucose, sucrose, lactose, fructose, starch, polydopamine and tannic acid, especially glucose.

The solvent used in the first step may comprise or consist of water and/or at least one organic solvent selected from the group consisting of dimethyl carbonate, dimethyl formamide, N-methyl formamide, sulfolane (tetrahydrothiophene-1,1-dioxide), 3-methyl sulfolane, N-butyl sulfone, dimethyl sulfoxide, pyrrolidinone (HEP), dimethyl piperidone (DMPD), N-methyl pyrrolidinone (NMP), N-methyl acetamide, dimethyl acetamide (DMAc), N,N-dimethyl formamide (DMF), diethyl acetamide (DEAc) dipropyl acetamide (DPAc), ethanol, propanol, butanol, hexanol, ethylene glycol, tetrachloroethylene, propylene glycol, toluene, turpentine, methyl acetate, ethyl acetate, petroleum ether, acetone, cresol and glycerol. A mixture of water and organic solvent, such as a polar solvent like ethanol may be used as the solvent, wherein the water and the organic solvent may be mixed in a weight ratio from 9:1 to 1:9, for example 3:2 to 2:3, such as about 1:1.

In an embodiment of the present disclosure, the amount of the vanadium nitride may be 1 to 100 parts by weight or 5 to 40 parts by weight, wherein the amount of vanadium nitride can be adjusted by adjusting the amounts of the used vanadium nitride an/or amounts of the precursor(s) thereof, and/or the amount of the reducing agent may be 10 to 100 parts by weight or 20 to 80 parts by weight, based on 100 parts by weight of the porous carbon material. When the amounts of the vanadium nitride and the reducing agent meet the above-described range, an optimal level of vanadium nitride catalyst particles may be uniformly formed on the surface of the porous carbon material. Additionally, it is possible to minimize non-crystalline carbon having low electrical conductivity and expose the catalyst surface to the maximum extent while maintaining large specific surface area, thereby maximizing the reactivity of lithium polysulfide and preventing dissolution in the electrolyte solution.

In the first step, the dispersion may be performed by sonication and/or magnetic stirring.

In the second step, the solvent removal may be performed by vacuum filtration, and the drying may be performed in the temperature condition of 50°C to 150°C, for example from 70 to 90°C, such as about 80°C, and may be performed for 1 to 48 hours, for example for 6 to 18 hours, such as about 12 hours.

Additionally, the third step includes a first process of thermally treating at 350°C to 650°C, 500°C to 650°C or 550°C to 650°C; and a second process, preferably following the first process, of thermally treating at 650°C to 1400°C, more than 650°C to 1400°C, 700°C to 900°C or 750°C to 850°C. Without being bonded to this theory, it is assumed that in the first process, the vanadium nitride is produced by pyrolysis and reduction of the vanadium nitride precursor, and in the second process, the vanadium nitride particles are bonded to the surface of the porous carbon material by carbonization reaction. In particular, the third step may be performed in an inert atmosphere, and the inert atmosphere may be formed using at least one gas selected from helium, neon, argon, carbon dioxide and nitrogen.

In an embodiment of the present disclosure, when manufacturing the carbon composite, especially in the method for manufacturing a carbon composite in accordance with the present invention, mixture comprising the vanadium nitride, NH₃, HF and acid having pKa of 4.0 or less are not used, that is, may be excluded from the scope of the invention.

Hereinafter, the present disclosure will be described in more detail through examples, but the following examples are provided to describe the present disclosure by way of illustration and the scope of the present disclosure is not limited thereto.

### Example 1

1.6g of carbon nanotubes; 24g of dicyandiamide and 0.8g of ammonium metavanadate; and 0.2g of glucose are mixed in a 500 mL solvent in which ethanol and water are mixed at a 1:1 volume ratio, and dissolved and dispersed through sonication and magnetic stirring.

Subsequently, the solvent except the vanadium nitride precursor adsorbed on the carbon nanotubes surface is removed through vacuum filtration.

Subsequently, drying is performed in a 80°C oven for 12 hours.

Subsequently, thermal treatment is performed in a tube furnace of an inert atmosphere at 600°C for 3 hours and at 800°C for 2 hours to obtain a carbon composite in which vanadium nitride particles are present on the surface of the carbon nanotubes. In this instance, the amount of the vanadium nitride particles is 20 parts by weight based on 100 parts by weight of the obtained carbon composite. The amount of the vanadium nitride particles is measured using a thermogravimetric analyzer (TGA).

### Example 2

The method of example 1 is performed except that reduced graphene oxide is used instead of carbon nanotubes, to obtain a carbon composite in which vanadium nitride particles are present on the reduced graphene oxide surface. In this instance, the amount of the vanadium nitride particles is 20 parts by weight based on 100 parts by weight of the obtained carbon composite. The amount of the vanadium nitride particles is measured using a thermogravimetric analyzer (TGA).

### Comparative example 1

24g of dicyanodiamide and 0.8g of ammonium metavanadate; and 0.8g of glucose are mixed in a 500 mL solvent in which ethanol and water are mixed at a 1:1 volume ratio, and dissolved and dispersed through sonication and magnetic stirring.

Subsequently, the solvent except the dicyanodiamide and ammonium metavanadate is removed through vacuum filtration.

Subsequently, drying is performed in a 80°C oven for 12 hours.

Subsequently, thermal treatment is performed in a tube furnace of an inert atmosphere at 600°C for 3 hours and at 800°C for 2 hours to obtain a carbon composite in which vanadium nitride particles are present on the surface of amorphous carbon produced through a carbonization process from the glucose.

In this instance, the amount of the vanadium nitride particles is 20 parts by weight based on 100 parts by weight of the obtained carbon composite. The amount of the vanadium nitride particles is measured using a thermogravimetric analyzer (TGA).

The specific surface area, pore volume and average pore size of the carbon composite manufactured in example 1, example 2 and comparative example 1 are measured. The measurement results are shown in the following Table 1.

Specific surface area measurement method

The specific surface area, pore volume and average pore size of the carbon composite manufactured in example 1, example 2 and comparative example 1 are calculated from the amount of adsorbed nitrogen gas under liquid nitrogen temperature (77K) using BEL Japan's BELSORP-mino II.

**[Table 1]**

| | Specific surface area (m²/g) | Pore volume (cm³/g) | Average pore size (nm) | I_{D}/I_{G} ratio |
|---|---|---|---|---|
| Example 1 | 334.99 | 1.44 | 17.14 | 0.95 |
| Example 2 | 337.78 | 2.44 | 28.94 | 0.95 |
| Comparative example 1 | 220.37 | 0.77 | 13.95 | amorphous |

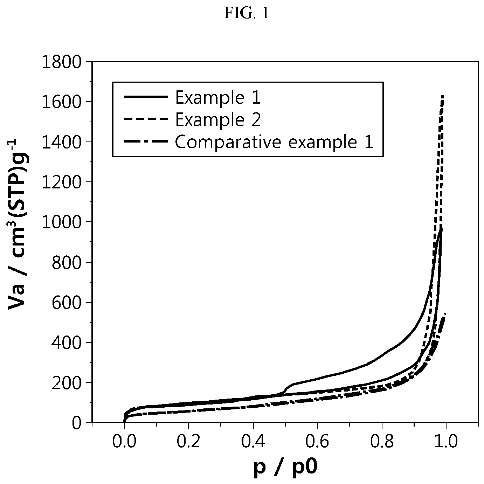

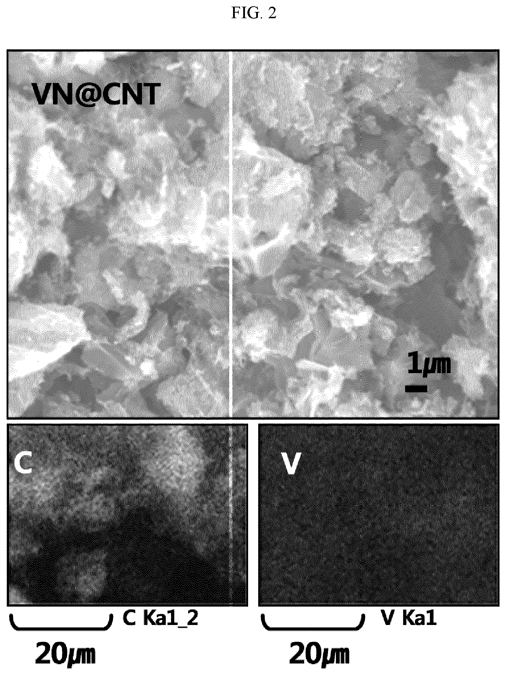

FIG. 1 shows 77K N₂ isotherm measurements of the carbon composite according to example 1, example 2 and comparative example 1, and Table 1 shows the specific surface area calculated using the BET equation. Additionally, the specific surface area and pore volume measurement results are shown in Table 1.FIG. 2 is a scanning electron microscopy (SEM) image of the observed carbon composite of example 1 in which the vanadium nitride particles are present on the surface of the carbon nanotubes. Specifically, the SEM image of Fig 2. was obtained for the area of 10 *µ*m X 10 *µ*m at 2,000x magnification.

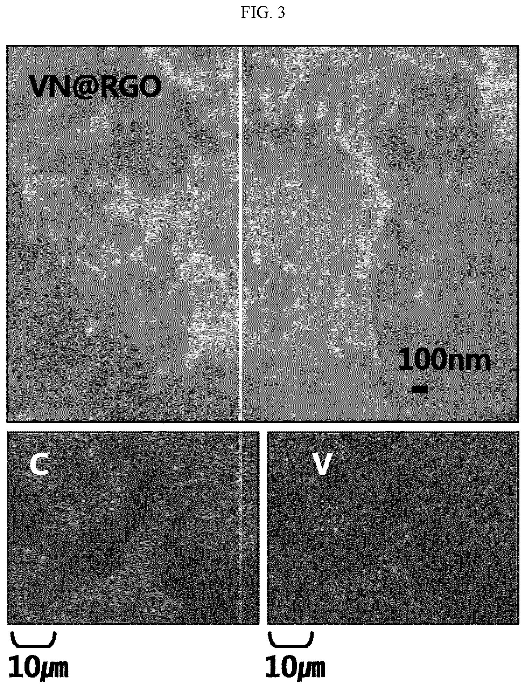

FIG. 3 is an SEM image of the observed carbon composite of example 2 in which the vanadium nitride particles are present on the surface of the reduced graphene oxide. Specifically, the SEM image of Fig. 3 was obtained for the area of 10 *µ*m X 10 *µ*m at 2,000x magnification.

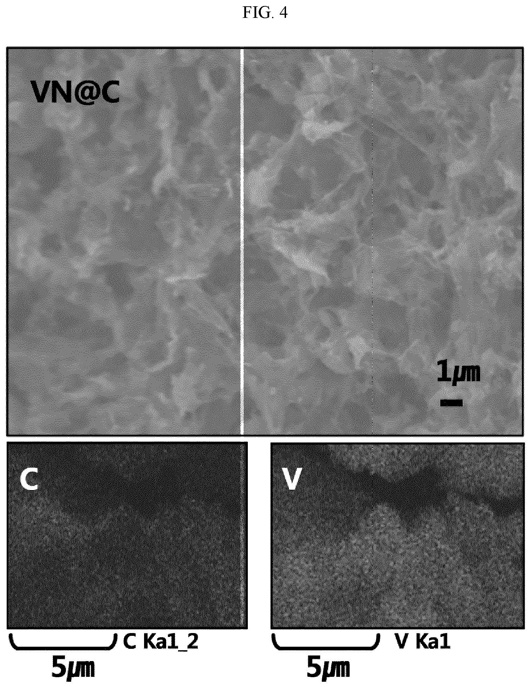

FIG. 4 is an SEM image of the observed carbon composite of comparative example 1 in which the vanadium nitride particles are present on the surface of the amorphous carbon such as carbon nanotubes. Specifically, the SEM image of Fig. 4 was obtained for the area of 10 *µ*m X 10 *µ*m at 2,000x magnification.

Referring to FIGS. 2 to 4, it can be seen that the vanadium nitride particles are uniformly present on the surface of the carbon nanotubes, the reduced graphene oxide and the amorphous carbon, respectively. It can be seen that the vanadium nitride particles are significantly agglomerated since the average size of the vanadium nitride particles on the amorphous carbon surface is about 1 *µ*m. In contrast, it can be seen that the average size of the vanadium nitride particles on the surface of the reduced graphene oxide or carbon nanotubes is 0.1 *µ*m or less.

### Example 3

### <Manufacture of positive electrode>

For a positive electrode active material, a porous carbon support in which sulfur (S₈) is infiltrated into carbon nanotubes is prepared. In this instance, the weight ratio of the carbon composite and the sulfur is 1:3. The carbon composite of example 1 as a conductive material and polyacrylic acid (PAA) as a binder are mixed with the positive electrode active material to prepare a positive electrode slurry.

In this instance, the weight ratio of the positive electrode active material, the conductive material and the binder is 88:5:7.

The slurry is coated on an aluminum foil using a Mathis coater and dried at the temperature of 50°C for 24 hours, followed by rolling, to manufacture a positive electrode.

### <Manufacture of lithium-sulfur battery>

For a negative electrode, a 45 *µ*m thick lithium metal thin film is prepared, and for an electrolyte, a mixture of 1M lithium bis(trifluoromethanesulfonyl)imide (LiTFSI) and 1 weight% of lithium nitrate (LiNO₃) dissolved in an organic solvent mixture of 1,3-dioxolane and dimethyl ether (DOL:DME=1:1 (volume ratio)) is prepared.

The manufactured and prepared positive and negative electrodes are placed facing each other with a polyethylene separator having the thickness of 16 *µ*m and porosity of 46% interposed between them, and 70 *µ*ℓ of the electrolyte is injected to manufacture a lithium-sulfur battery.

### Example 4

A lithium-sulfur battery was manufacture by the same method as Example 3 except that the carbon composite of Example 2 was used instead of the carbon composite of Example 1 for a conductive material.

### Example 5

### <Manufacture of positive electrode>

A positive electrode active material is prepared, in which sulfur is infiltrated into the carbon composite manufactured in example 1 through a melt infiltration method. Specifically, the carbon composite and the sulfur (S₈) are blended and uniformly mixed. Subsequently, thermal treatment is performed in a 150°C oven for 30 min to impregnate the sulfur into the carbon composite. In this instance, the weight ratio of the carbon composite and the sulfur is 1:3.

A polyacrylic acid (PAA) binder and a carbon fiber conductive material are mixed with the positive electrode active material to prepare a positive electrode slurry. In this instance, the weight ratio of the positive electrode active material, the conductive material and the binder in the slurry is 88:5:7.

The slurry is coated on an aluminum foil using a Mathis coater and dried at the temperature of 50°C for 24 hours, followed by rolling, to manufacture a positive electrode.

### <Manufacture of lithium-sulfur battery>

For a negative electrode, a 45 *µ*m thick lithium metal thin film is prepared, and for an electrolyte, a mixture of 1M lithium bis(trifluoromethanesulfonyl)imide (LiTFSI) and 1 weight%of lithium nitrate (LiNO₃) dissolved in an organic solvent of 1,3-dioxolane and dimethyl ether (DOL:DME=1:1 (volume ratio)) is prepared.

The manufactured and prepared positive and negative electrodes are placed facing each other with a polyethylene separator having the thickness of 16 *µ*m and porosity of 46% interposed between them, and 70 *µ*ℓ of the electrolyte is injected to manufacture a lithium-sulfur battery.

### Comparative example 2

A lithium-sulfur battery was manufacture by the same method as Example 3 except that CNT was used instead of the carbon composite of Example 1 for a conductive material.

### Comparative example 3

A lithium-sulfur battery was manufacture by the same method as Example 3 except that the carbon composite of Comparative Example 1 was used instead of the carbon composite of Example 1 for a conductive material.

### Comparative example 4

A positive electrode and a lithium-sulfur battery are manufactured in the same way as example 5 except that carbon nanotubes are used instead of the carbon composite manufactured in example 1.

### Comparative example 5

### <Manufacture of positive electrode>

A positive electrode active material is prepared in which sulfur is infiltrated into CNT through a melt infiltration method. Specifically, the carbon composite and the sulfur (S8) are blended and uniformly mixed. Subsequently, thermal treatment is performed in a 150°C oven for 30 min to impregnate the sulfur into the carbon composite. In this instance, the weight ratio of the carbon composite and the sulfur is 1:3.

A polyacrylic acid (PAA) binder, a polyvinyl alcohol (PVA) thickening agent and a carbon nanotube conductive material are added to the positive electrode active material and mixed together to prepare a positive electrode slurry. In the slurry, the weight ratio of the positive electrode active material, the binder, the thickening agent and the conductive material is 88:6.5:0.5:5.

The slurry is coated on an aluminum foil using a Mathis coater and dried at the temperature of 50°C for 24 hours, followed by rolling, to manufacture a positive electrode.

### <Manufacture of lithium-sulfur battery>

For a negative electrode, a 45 *µ*m thick lithium metal thin film is prepared, and for an electrolyte, a mixture of 1M lithium bis(trifluoromethanesulfonyl)imide (LiTFSI) and 1 weight% of lithium nitrate (LiNO₃) dissolved in an organic solvent of 1,3-dioxolane and dimethyl ether (DOL:DME=1:1 (volume ratio)) is prepared.

The manufactured and prepared positive and negative electrodes are placed facing each other with a polyethylene separator having the thickness of 16 *µ*m and porosity of 46% interposed between them, and 70 *µ*ℓ of the electrolyte is injected to manufacture a lithium-sulfur battery.

### <Evaluation of the performance for the lithium-sulfur battery>

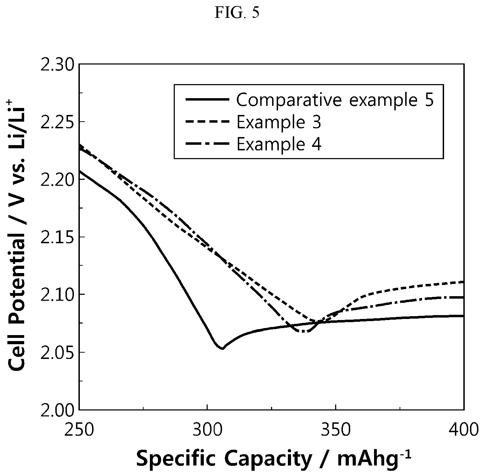

The performance of the lithium-sulfur batteries of Examples 3 to 5 and Comparative Examples 2 to 5 prepared above were evaluated by cyclic voltammetry (CV), and the results are shown in FIG. 5 to 9.

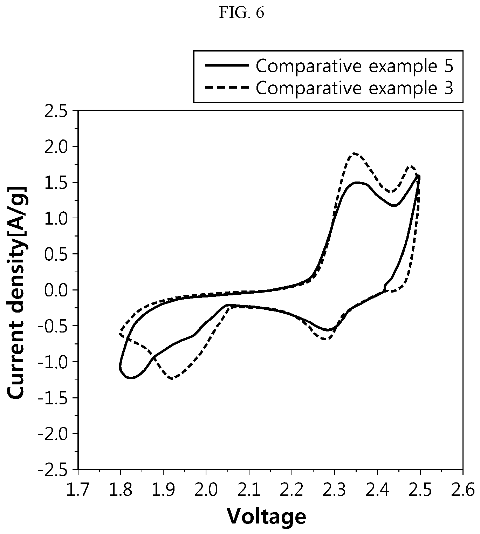

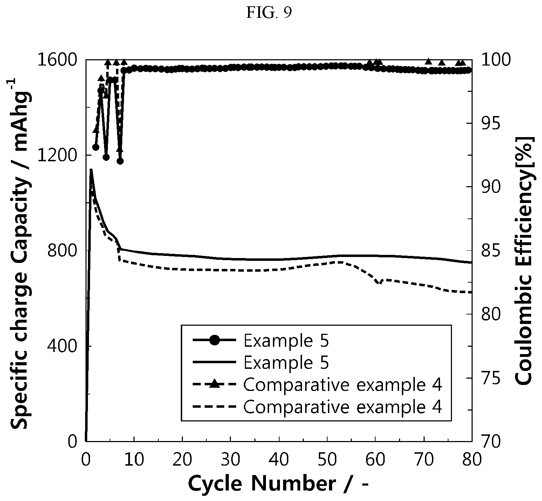

Specifically, in the voltage range of 1.7 V to 2.8 V (vs Li/Li+) for the battery to be evaluated, the first 3 charge/discharge was operated by 0.1C, the subsequent 3 charge/discharge was operated by 0.3C, and the subsequent charge/discharge was operated by 0.1C. Charging and discharging were repeated at a current density of 0.5C, and the capacity-voltage curves (FIGS. 5, 7, and 8), voltage-current density curves (FIG. 6) and cycle-specific capacity curves (FIG. 9) in the first cycle were shown.

Referring to FIG. 5, the batteries of Examples 3 and 4 using a carbon composite containing vanadium nitride particles on a porous carbon material as a positive electrode additive exhibit cell performance compared to the battery of Comparative Example 5 due to the catalytic activity of the vanadium nitride particles. Through this, it was confirmed that the overvoltage of the lithium sulfur battery could be improved due to the vanadium nitride particles and the conversion rate of lithium polysulfide to lithium sulfide could be improved. In particular, it was confirmed that Example 3 using carbon nanotubes could exhibit better performance than Example 4 using reduced graphene oxide.

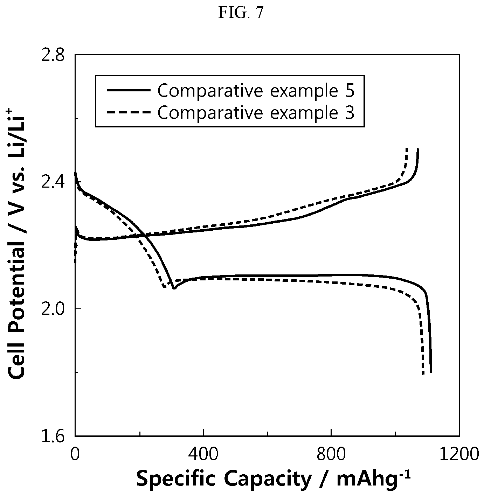

In addition, referring to FIGS. 6 and 7, the battery of Comparative Example 3 using the carbon composite of Comparative Example 1 in which the vanadium nitride particles are located on the surface of the amorphous carbon which the specific surface area is small and the amount of pores are small as the conductive material shows increased resistance due to low electrical conductivity of the amorphous carbon, and accordingly, it was confirmed that the performance was inferior to that of Comparative Example 5 using an anode not containing vanadium nitride particles.

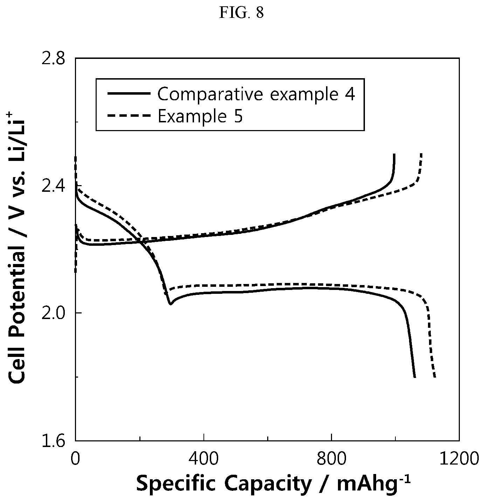

FIGS. 8 and 9 are performance evaluation graphs of the lithium-sulfur batteries of example 5 and comparative example 4. It can be seen that the lithium-sulfur battery of example 5 has improved performance by the overvoltage mitigation and conversion reaction promotion. Through this, it was confirmed that the performance of a lithium-sulfur battery can be improved by supporting sulfur (S8) in a carbon composite containing vanadium nitride particles on a porous carbon material and using it as a cathode active material

While the present disclosure has been described with regard to a limited number of embodiments and drawings, the present disclosure is not limited thereto and it is obvious to those skilled in the art that various modifications and changes may be made thereto within the technical aspect of the present disclosure and the appended claims and equivalents thereof, especially that when reference is made to embodiments of the invention herein this does not exclude the combination of two or more of those embodiments.

## Claims

1. A positive electrode active material, comprising:
a porous carbon support; and
a sulfur or sulfide infiltrated into pores of the porous carbon support,
wherein the porous carbon support comprises the carbon composite,
wherein the carbon composite, comprises:
a porous carbon material; and
vanadium nitride particles on a surface of the porous carbon material.

2. The positive electrode active material according to claim 1, wherein a specific surface area measured by BET method in accordance with ISO 15901:2019 of the carbon composite is 250 m²/g or more.

3. The positive electrode active material according to claim 1 or 2, wherein a pore volume according to ASTM D4641 of the carbon composite is 1.0 cm³/g or more.

4. The positive electrode active material according to any of the preceding claims, wherein an average pore size measured by calculating through N₂ isotherm analysis obtained based on adsorption of liquid nitrogen of the carbon composite is 10 nm or more.

5. The positive electrode active material according to any of the preceding claims, wherein an average size of the vanadium nitride particles measured by XRD analysis is 200 nm or less.

6. The positive electrode active material according to any of the preceding claims, wherein the vanadium nitride particles are included in an amount of 5 to 50 parts by weight based on 100 parts by weight of the carbon composite.

7. The positive electrode active material according to any of the preceding claims, wherein a weight ratio of the sulfur or sulfide and the carbon composite is 1:1 to 9:1.

8. A positive electrode, comprising:
a current collector; and
an active material layer on at least one surface of the current collector, the active material layer comprising the positive electrode active material according to any of the preceding claims, a binder and a conductive material.

9. The positive electrode according to claim 8, wherein the conductive material comprises a carbon composite comprising a porous carbon material; and vanadium nitride particles on a surface of the porous carbon material.

10. A positive electrode, comprising:
a current collector; and
an active material layer on at least one surface of the current collector, the active material layer comprising a porous carbon support in which a sulfur or a sulfur compound is infiltrated into pores, a binder and a conductive material,
wherein the conductive material comprises the carbon composite.
wherein the carbon composite, comprises:
a porous carbon material; and
vanadium nitride particles on a surface of the porous carbon material .

11. The positive electrode according to claim 10, wherein the conductive material is included in an amount of 0.01 to 30 parts by weight based on 100 parts by weight of the positive electrode active material layer in total.

12. A method for manufacturing a carbon composite comprising a porous carbon material; and vanadium nitride particles on a surface of the porous carbon material, , the method comprising:
a first step of adding and dispersing a porous carbon material; vanadium nitride or its precursor; and a reducing agent in a solvent;
a second step of filtering a result of the first step to remove the solvent and drying; and
a third step of thermally treating a result of the second step in an inert atmosphere,
wherein the third step comprises:
a first process of thermally treating at 350°C to 650°C; and
a second process of thermally treating at 650°C to 1400°C.

## Patentansprüche

1. Aktives Material für eine positive Elektrode, umfassend:
einen porösen Kohlenstoffträger; und
einen Schwefel oder ein Sulfid, das in Poren des porösen Kohlenstoffträgers infiltriert ist,
wobei der poröse Kohlenstoffträger den Kohlenstoffverbundstoff umfasst,
wobei der Kohlenstoffverbundstoff umfasst:
ein poröses Kohlenstoffmaterial; und
Vanadiumnitridpartikel auf einer Oberfläche des porösen Kohlenstoffmaterials.

2. Aktives Material für eine positive Elektrode nach Anspruch 1, wobei eine spezifische Oberfläche, gemessen durch das BET-Verfahren gemäß ISO 15901:2019, des Kohlenstoffverbundstoffs 250 m² /g oder mehr beträgt.

3. Aktives Material für eine positive Elektrode nach Anspruch 1 oder 2, wobei ein Porenvolumen gemäß ASTM D4641 des Kohlenstoffverbundstoffs 1,0 cm³ /g oder mehr beträgt.

4. Aktives Material für eine positive Elektrode nach einem der vorhergehenden Ansprüche, wobei eine durchschnittliche Porengröße, gemessen durch Berechnen durch N₂-Isothermanalyse, die basierend auf der Adsorption von flüssigem Stickstoff des Kohlenstoffverbundstoffs erhalten wird, 10 nm oder mehr beträgt.

5. Aktives Material für eine positive Elektrode nach einem der vorhergehenden Ansprüche, wobei eine durchschnittliche Größe der Vanadiumnitridpartikel, gemessen durch XRD-Analyse, 200 nm oder weniger beträgt.

6. Aktives Material für eine positive Elektrode nach einem der vorhergehenden Ansprüche, wobei die Vanadiumnitridpartikel in einer Menge von 5 bis 50 Gewichtsteilen, bezogen auf 100 Gewichtsteile des Kohlenstoffverbundstoffs, enthalten sind.

7. Aktives Material für eine positive Elektrode nach einem der vorhergehenden Ansprüche, wobei ein Gewichtsverhältnis des Schwefels oder Sulfids und des Kohlenstoffverbundstoffs 1:1 bis 9:1 beträgt.

8. Positive Elektrode, umfassend:
einen Stromabnehmer; und
eine Aktivmaterialschicht auf mindestens einer Oberfläche des Stromabnehmers, wobei die Aktivmaterialschicht das aktive Material für eine positive Elektrode nach einem der vorhergehenden Ansprüche, ein Bindemittel und ein leitfähiges Material umfasst.

9. Positive Elektrode nach Anspruch 8, wobei das leitfähige Material einen Kohlenstoffverbundstoff, umfassend ein poröses Kohlenstoffmaterial; und Vanadiumnitridpartikel auf einer Oberfläche des porösen Kohlenstoffmaterials umfasst.

10. Positive Elektrode, umfassend:
einen Stromabnehmer; und
eine Aktivmaterialschicht auf mindestens einer Oberfläche des Stromabnehmers, wobei die Aktivmaterialschicht einen porösen Kohlenstoffträger, in dem ein Schwefel oder eine Schwefelverbindung in Poren infiltriert ist, ein Bindemittel und ein leitfähiges Material umfasst,
wobei das leitfähige Material den Kohlenstoffverbundstoff umfasst.
wobei der Kohlenstoffverbundstoff umfasst:
ein poröses Kohlenstoffmaterial; und
Vanadiumnitridpartikel auf einer Oberfläche des porösen Kohlenstoffmaterials.

11. Positive Elektrode nach Anspruch 10, wobei das leitfähige Material in einer Menge von 0,01 bis 30 Gewichtsteilen, bezogen auf 100 Gewichtsteile der Aktivmaterialschicht für die positive Elektrode insgesamt, enthalten ist.

12. Verfahren zur Herstellung eines Kohlenstoffverbundstoffs, umfassend ein poröses Kohlenstoffmaterial; und Vanadiumnitridpartikel auf einer Oberfläche des porösen Kohlenstoffmaterials, wobei das Verfahren umfasst:
einen ersten Schritt des Zugebens und Dispergierens eines porösen Kohlenstoffmaterials; Vanadiumnitrid oder seines Vorläufers; und eines Reduktionsmittels in einem Lösungsmittel;
einen zweiten Schritt des Filterns eines Ergebnisses des ersten Schritts, um das Lösungsmittel zu entfernen, und Trocknen; und
einen dritten Schritt des thermischen Behandelns eines Ergebnisses des zweiten Schritts in einer inerten Atmosphäre,
wobei der dritte Schritt umfasst:
einen ersten Prozess des thermischen Behandelns bei 350 °C bis 650 °C; und
einen zweiten Prozess des thermischen Behandelns bei 650 °C bis 1400 °C.

## Revendications

1. Matériau actif d'électrode positive, comprenant :
un support de carbone poreux ; et
un soufre ou un sulfure infiltré dans des pores du support de carbone poreux,
dans lequel le support de carbone poreux comprend le composite de carbone,
dans lequel le composite de carbone, comprend :
un matériau de carbone poreux ; et
des particules de nitrure de vanadium sur une surface du matériau de carbone poreux.

2. Matériau actif d'électrode positive selon la revendication 1, dans lequel une surface spécifique mesurée selon le procédé BET selon ISO 15901:2019 du composite de carbone est égale ou supérieure à 250 m²/g.

3. Matériau actif d'électrode positive selon la revendication 1 ou 2, dans lequel un volume de pore selon ASTM D4641 du composite de carbone est égal ou supérieur à 1,0 cm³/g.

4. Matériau actif d'électrode positive selon l'une quelconque des revendications précédentes, dans lequel une taille de pore moyenne, mesurée par un calcul par une analyse isotherme N₂ obtenue sur la base de l'adsorption d'azote liquide du composite de carbone, est égale ou supérieure à 10 nm.

5. Matériau actif d'électrode positive selon l'une quelconque des revendications précédentes, dans lequel une taille moyenne des particules de nitrure de vanadium, mesurée par analyse XRD est égale ou inférieure à 200 nm.

6. Matériau actif d'électrode positive selon l'une quelconque des revendications précédentes, dans lequel les particules de nitrure de vanadium sont incluses dans une quantité de 5 à 50 parties en poids sur la base de 100 parties en poids du composite de carbone.

7. Matériau actif d'électrode positive selon l'une quelconque des revendications précédentes, dans lequel un rapport en poids du soufre ou du sulfure et du composite de carbone est 1:1 à 9:1.

8. Électrode positive, comprenant :
un collecteur de courant ; et
une couche de matériau actif sur au moins une surface du collecteur de courant, la couche de matériau actif comprenant le matériau actif d'électrode positive selon l'une quelconque des revendications précédentes, un liant et un matériau conducteur.

9. Électrode positive selon la revendication 8, dans laquelle le matériau conducteur comprend un composite de carbone comprenant un matériau de carbone poreux ; et des particules de nitrure de vanadium sur une surface du matériau de carbone poreux.

10. Électrode positive, comprenant :
un collecteur de courant ; et
une couche de matériau actif sur au moins une surface du collecteur de courant, la couche de matériau actif comprenant un support de carbone poreux dans lequel un soufre ou un composé de sulfure est infiltré dans des pores, un liant et un matériau conducteur,
dans laquelle le matériau conducteur comprend le composite de carbone.
dans laquelle le composite de carbone, comprend :
un matériau de carbone poreux ; et
des particules de nitrure de vanadium sur une surface du matériau de carbone poreux.

11. Électrode positive selon la revendication 10, dans laquelle le matériau conducteur est inclus dans une quantité de 0,01 à 30 parties en poids sur la base de 100 parties en poids de la couche de matériau actif d'électrode positive au total.

12. Procédé de fabrication d'un composite de carbone comprenant un matériau de carbone poreux ; et des particules de nitrure de vanadium sur une surface du matériau de carbone poreux, le procédé comprenant :
une première étape d'ajout et de dispersion d'un matériau de carbone poreux ; de nitrure de vanadium ou de son précurseur ; et d'un agent réducteur dans un solvant ;
une deuxième étape de filtrage d'un résultat de la première étape pour retirer le solvant et de séchage ; et
une troisième étape de traitement thermique d'un résultat de la deuxième étape dans une atmosphère inerte,
dans lequel la troisième étape comprend :
un premier processus de traitement thermique à 350°C à 650°C ; et
un deuxième processus de traitement thermique à 650°C à 1400°C.
